Europäisches Patentamt

European Patent Office

Office européen des brevets

(11) Veröffentlichungsnummer: **0 213 579**
**A2**

(12) **EUROPÄISCHE PATENTANMELDUNG**

(21) Anmeldenummer: 86111695.2

(22) Anmeldetag: 23.08.86

(51) Int. Cl.⁴ **A01B 23/04** ,
//F16B7/18,F16B39/10

(30) Priorität: 29.08.85 US 770806

(43) Veröffentlichungstag der Anmeldung:
**11.03.87 Patentblatt 87/11**

(84) Benannte Vertragsstaaten:
**DE FR GB**

(71) Anmelder: **DEERE & COMPANY**
**1 John Deere Road**
**Moline Illinois 61265(US)**

(72) Erfinder: **Wolak, David John**
**835-37th Street**
**Moline Illinois 61265(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Landwirtschaftliches Gerät mit einem Rahmenteil und einem Werkzeugrahmen.**

㊸ Landwirtschaftliches Gerät mit einem Rahmenteil (16) und einem daran in horizontaler Richtung begrenzt verstellbar angeschlossenen, eine Gruppe von Werkzeugen aufnehmenden Werkzeugrahmen (20), wobei zu dessen Anschluß an dem Rahmenteil (16) über Befestigungsmittel (48) ein Halter (44) mit einem in Vertikalrichtung offenen Langloch (56) am Rahmenteil (16) angeordnet und am Werkzeugrahmen (20) ein weiterer Halter (46) mit mindestens einer Durchgangsöffnung (54) vorgesehen ist, die mit dem Langloch (56) zur Deckung bringbar ist, wobei durch Langloch (56) und Durchgangsöffnung (54) das Befestigungsmittel (48) undrehbar geführt ist.

FIG. 2

## Landwirtschaftliches Gerät mit einem Rahmenteil und einem Werkzeugrahmen

Die Erfindung bezieht sich auf ein landwirtschaftliches Gerät mit einem Rahmenteil und einem daran in horizontaler Richtung begrenzt verstellbar angeschlossenen, eine Gruppe von Werkzeugen aufnehmenden Werkzeugrahmen, wobei zu dessen Anschluß an den Rahmenteil über Befestigungsmittel ein Halter mit einem in Vertikalrichtung offenen Langloch am Rahmenteil angeordnet ist.

Derartige landwirtschaftliche Geräte finden in der Regel als Scheibeneggen ihren Einsatz, das heißt, die Gruppen von Werkzeugen sind als umlaufende, den Boden bearbeitende Scheiben ausgebildet. Statt der Scheiben können aber auch andere Werkzeuge, wie zum Beispiel Grupperzinken Verwendung finden. Mehrere Gruppen von Werkzeugen sind quer zur Fahrtrichtung des landwirtschaftlichen Gerätes angeordnet, wobei die Winkelstellung je nach den Bodenverhältnissen oder dem einzuarbeitenden Gut variiert werden muß. Die Winkeleinstellung allerdings bei den sich auf dem Markt befindlichen Scheibeneggen verlangt den Einsatz von verschiedenen Werkzeugen und ist damit schwierig und zeitaufwendig durchzuführen. So müssen bei einer Schraubverbindung, durch die die Werkzeuggruppen bzw. die Werkzeugrahmen an dem Hauptrahmen befestigt werden, zwei Schraubenschlüssel verwendet werden, wobei mit dem einen der Schraubenkopf gehalten wird, wohingegen mit den anderen die Mutter zu lösen ist. Hinzu kommt, daß danach zum Verstellen der Werkzeuggruppen weitere Hilfsmittel erforderlich sind, beispielsweise große Rohre, damit die Werkzeuggruppe in ihre neue Winkelposition verstellt werden kann. Danach sind wiederum die Schraubenschlüssel zu verwenden, um die Schraubverbindungen fest anzuziehen. Bei dieser manuellen Winkelverstellung ist es darüber hinaus ebenfalls nicht einfach, die beiderseits der Längsmittelachse des landwirtschaftlichen Gerätes vorgesehenen Werkzeuggruppen zueinander einzustellen, so daß die sich zugelegenen inneren Enden der Werkzeuggruppen unterschiedliche Winkel aufweisen, wodurch die Leistung verringert wird.

Bei dem landwirtschaftlichen Gerät, von dem die Erfindung ausgeht (John Deere Operators Manual OM-A 48 057, Ausgabe A4) sind für die entsprechenden Winkelstellungen entsprechende Bohrungen vorgesehen, wobei bereits auch Langlöcher Verwendung finden. Hier müssen die Schrauben aus den Bohrungen entfernt werden und bei einer Winkelverstellung wieder neu eingesetzt werden, was natürlich zeitaufwendig ist.

Die mit der Erfindung zu lösende Aufgabe wird darin gesehen, die Befestigung der Werkzeugrahmen an dem Rahmenteil einfacher zu gestalten. Diese Aufgabe ist nach der Erfindung dadurch gelöst worden, daß am Werkzeugrahmen ein Halter mit mindestens einer Durchgangsöffnung vorgesehen ist, die mit dem Langloch zur Deckung bringbar ist, wobei durch Langloch und Durchgangsöffnung das Befestigungsmittel undrehbar geführt ist. Auf diese Weise kann sich beim Lockern des Befestigungsmittels das Befestigungmittel selbst nicht drehen, so daß nur ein einziger Schraubenschlüssel zum Lösen der Mutter erforderlich wird, wobei durch das in Deckung bringen von Langloch und Durchgangsöffnung beim Verstellen des Werkzeugrahmens ein Herausnehmen des Befestigungsmittels nicht mehr erforderlich ist.

Nach der Erfindung ergibt sich ein noch größerer Verstellbereich, wenn die Durchgangsöffnung als Langloch, das Befestigungsmittel als Schraube mit gegen Drehung gesichertem Schraubenkopf ausgebildet ist und wenn die Langlöcher mit ihrer langen Achse parallel oder etwa parallel zur Längsachse des zugehörigen Werkzeugrahmens bzw. des Rahmenteils angeordnet sind. Dadurch schneiden sich die Langlöcher und durch entsprechendes Verschieben ergeben sich relativ große Verstellbereiche.

In einfacher Weise kann ein Drehen des Besfestigungsmittels dadurch verhindert werden, daß dieses in einem Sicherungsstück geführt ist, welches gegen Drehung gesichert ist, wozu das Sicherungsstück mit einem Schenkelteil gegen den Rahmenteil bzw. gegen den Werkzeugrahmen anliegt und das Befestigungsmittel gegen Drehung gesichert aufnimmt. Dies kann nach der Erfindung in vorteilhafter Weise dadurch erfolgen, daß bei als Schraube ausgebildeten Befestigungsmittel das Sicherungsstück eine dem Schraubenkopf entsprechende Ausnehmung und eine dem Schraubenschaft entsprechende Bohrung aufweist, wodurch verhindert wird, daß sich der Schraubenkopf in seiner entsprechenden Ausnehmung drehen kann, da der Schraubenkopf in der Regel als Vierkant ausgebildet ist.

Wenn nach der Erfindung das Sicherungsstück U-förmig ausgebildet ist, wobei in einem Schenkelteil die Ausnehmung und in dem anderen Schenkelteil die Bohrung für den Schraubenschaft vorgesehen ist, kann das Sicherungsstück neben der Drehsicherung für den Schraubenkopf noch eine weitere Funktion, und zwar die einer Unterlegscheibe wahrnehmen, so daß auch Unterlegscheiben zum Festsetzen des Befestigungsmittels nicht noch zusätzlich erforderlich werden.

Damit mit letzter Sicherheit vollkommen ausgeschlossen werden kann, daß sich das Befestigungsmittel während des Einsatzes in den zugehörigen Langlöchern bewegt, kann außerdem nach einem weiteren erfindungsgemäßen Vorschlag zwischen Rahmenteil und Werkzeugrahmen ein Verriegelungsmechanismus vorgesehen werden, der einen unter der Wirkung einer Feder stehenden Verriegelungteil aufweist, der in einem Aufnahmeteil in verschiedenen Positionen aufnehmbar ist, d.h. beim winkligen Verstellen kann der Verriegelungteil unter der Federwirkung selbsttätig in seine gewünschte Position einrasten. Andererseits kann der als Stift ausgebildete Verriegelungteil eine Nut mit einem Horizontalanschlag aufweisen, der gegen die Wirkung der Feder in eine den Aufnahmeteil freigebende und sich auf einem Gehäuse ab stützende Position verstellbar ist, d.h. solange sich der Verriegelungsteil in dieser Position befindet, kann der Werkzeugrahmen ohne weiteres verschoben werden. Um zu vermeiden, daß zum Verstellen des Werkzeugrahmens große als Hebel einsetzbare Rohre Verwendung finden, wird nach der Erfindung ferner vorgeschlagen, daß zwischen Rahmenteil und Werkzeugrahmen eine Stellvorrichtung vorgesehen ist, über die eine leichte Winkelverstellung des Werkzeugrahmens erreichbar ist. Zweckmäßig kann diese Stellvorrichtung, sofern mehrere Werkzeuggruppen Verwendung finden, unmittelbar auf zwei einander zugelegene Werkzeugrahmen wirken.

Bei einem Gerät mit zwei Werkzeugrahmen wird zum Verringern der Transportbreite vorgeschlagen, daß jeder Werkzeugrahmen einen durch ein Gelenk geteilten inneren und äußeren Werkzeugrahmenteil aufweist, wobei der äußere Werkzeugrahmenteil für die Transportstellung vertikal verschwenkbar ist und die einander zugelegenen Enden der inneren Werkzeugrahmenteile über ein Zwischenstück miteinander verbunden sind, das gegen Höhenverstellung durch einen gegen das Zwischenstück anliegenden Zentralträger gesichert ist.

In der Zeichnung ist ein nachfolgend näher erläutertes Ausführungsbeispiel des Erfindunggegenstandes dargestellt.

Es zeigt:

Fig. 1 ein landwirtschaftliches Gerät in Form einer Scheibenegge mit strichpunktiert angedeuteten Werkzeuggruppen,

Fig. 2 den Anschluß eines Werkzeugrahmens an den Rahmenteil mit Bezug auf Fig. 1 im größeren Maßstab,

Fig. 3 einen Schnitt nach der Linie 3-3 in Fig. 2,

Fig. 4 ein das Befestigungsmittel gegen Drehen sicherndes Sicherungsstück,

Fig. 5 eine weitere Ausführung für das Sicherungsstück nach Fig. 4,

Fig. 6 Stellvorrichtungen zum Verstellen der Winkelstellungen der Werkzeuggruppen,

Fig. 7 einen Verriegelungsmechanismus für Rahmenteil und Werkzeugrahmen, damit der Werkzeugrahmen die eingestellte Winkelstellung auch nach längerem Einsatz beibehält,

Fig. 8 einen Schnitt nach der Linie 8-8 in Fig. 7,

Fig. 9 einen Schnitt nach der Linie 9-9 in Fig. 1.

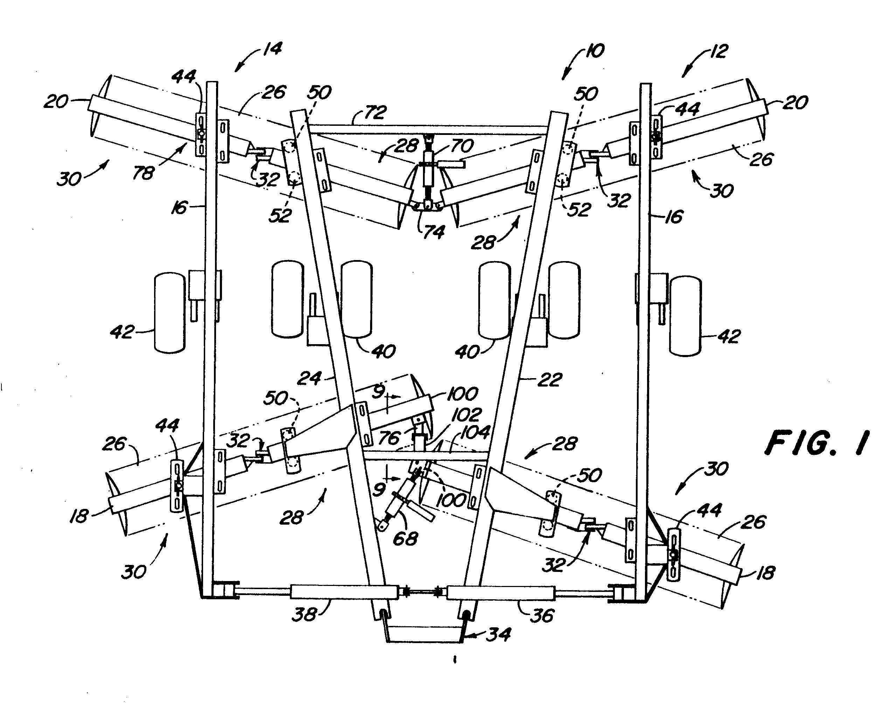

In Fig. 1 der Zeichnung ist die Erfindung an einer Scheibenegge erläutert, die einen Zentralrahmen 10 und rechte und linke Flügelteile 12 und 14 aufweist. Der Zentralrahmen 10 und die Flügelteile 12 und 14 sind normalerweise so angeordnet, daß sie nebeneinander, wie es in Fig. 1 dargestellt ist, zum Einsatz kommen. Hierbei weist jeder Flügelteil 12 und 14 einen Rahmenteil 16 auf, der sich zwischen zwei Werkzeugrahmen 18 und 20 erstreckt, die quer zur Fahrtrichtung angeordnet sind und mit dem Rahmenteil in Verbindung stehen. Wie ferner aus Fig. 1 hervorgeht, sind die Werkzeugrahmen 18 und 20 noch an den Zentralrahmen 10 angeschlossen, der hierzu noch Rahmenteile 22 und 24 aufweist. Eine derartige Scheibenegge ist beispielsweise in der EP-A2-0 164 724 offenbart.

An die Werkzeugrahmen 18 und 20 sind Gruppen von Werkzeugen 26 in Form von den Boden bearbeitenden Scheiben angeschlossen. Selbstverständlich können auch andere Bodenbearbeitungswerkzeuge Verwendung finden. Jeder Werkzeugrahmen ist geteilt ausgebildet und besteht damit aus einem inneren und einem äußeren Werkzeugrahmenteil 28 und 30, die über ein Gelenk 32 miteinander derart verbunden sind, daß die äußeren Werkzeugrahmenteile zu Transportzwecken in eine vertikale Position verstellt werden können, gleichgültig wie die Winkelstellung der Werkzeugrahmen ist.

An den Zentralteil 10 ist noch eine Anhängevorrichtung 34 gelenkig angeschlossen, die an ihrem vorderen Ende eine Zugvorrichtung zum Anschluß an ein ziehendes Fahrzeug, beispielsweise ein Ackerschlepper, aufzeigt.

Hydraulisch beaufschlagbare Arbeitszylinder 36 und 38 erstrecken sich zwischen dem Zentralteil 10 und den Rahmenteilen 16, damit die Flügelteile 12 und 14 zu Transportzwecken in eine vertikale Position um die Gelenke 32 verschwenkbar sind. Außerdem ist der Zentralrahmen 10 auf Laufrädern 40 angeordnet, die beim Arbeitseinsatz angehoben werden können, und zwar über hydraulisch beaufschlagbare Zylinder, die der Einfachheit halber in der Zeichnung nicht dargestellt sind. Auch die Flügelteile 12 und 14 sind auf Laufrädern 42 angeordnet, die in ähnlicher Weise, wie die Laufräder 40, mit Bezug auf ihre zugehörigen Rahmenteile höhenverstellbar sind.

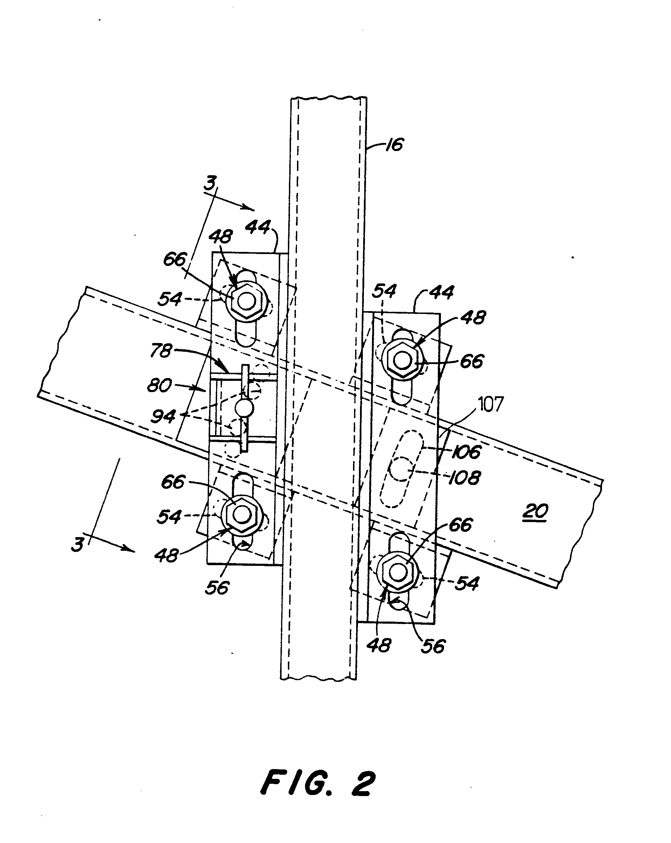

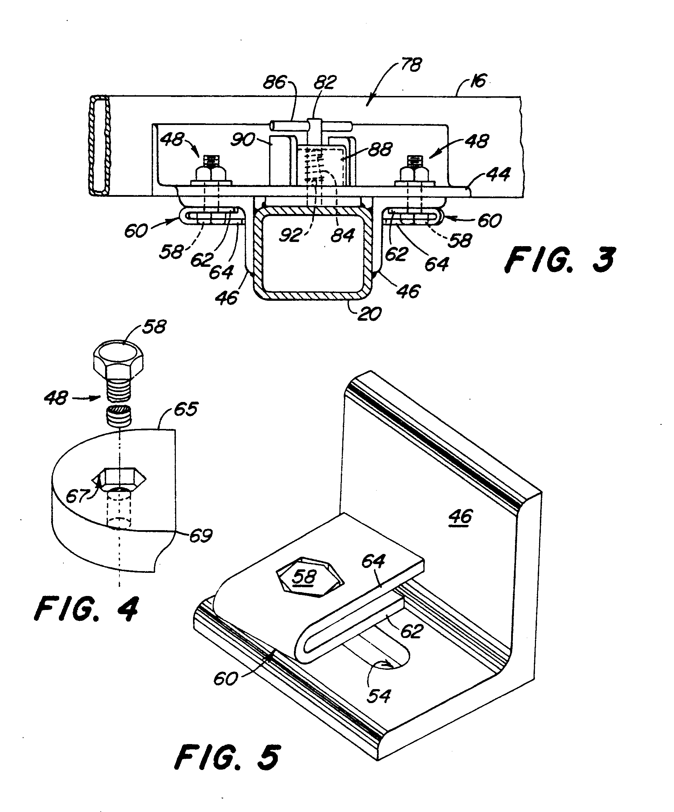

Wie die Werkzeugrahmen 18 und 20 an den Rahmenteil 16 bzw. die Rahmenteile 22 und 24 angeschlossen sind, geht am besten aus den Fig. 2, 3, 4 und 5 hervor. Da die Befestigungen ähnlich sind, wird lediglich eine einzige Befestigungsstelle im einzelnen beschrieben. So geht aus Fig. 3 hervor, daß der Werkzeugrahmen 20 unterhalb des Rahmenteiles 16 aufgehängt ist, und zwar über Halter 46 in Form von Winkeleisen, die an den Werkzeugrahmen 20 angeschweißt sind, wobei an dem Rahmenteil 16 ebenfalls winklig ausgebildete Halter 44 angeschweißt sind und die Verbindung zwischen den Haltern 44 und 46 über Befestigungsmittel 48 erfolgt. Die Winkeleinstellung eines Werkzeugrahmens 20 erfolgt über einen vertikalen Zapfen 50, der am besten aus Fig. 1 zu ersehen ist. Während der Werkzeugrahmen 20 mit dem Zapfen 50 gekuppelt ist, ist er nicht mit einem vertikalen Zapfen 52 gekuppelt, der gegenüber dem Zapfen 50 vorgesehen ist und der den Werkzeugrahmen in seiner Position hält, wenn er winklig eingestellt wurde. Die Halter 44 und 46 sind beide mit vertikal offenen zueinander ausgerichteten Langlöchern 54 und 56 versehen, durch die sich die Befestigungsmittel 48 erstrecken. Aus Fig. 1 und 2 ist ersichtlich, daß sich die Langlöcher 56 und 54 einmal in Längsrichtung und zum anderen in Querrichtung erstrecken, um ein horizontales Einstellen des Werkzeugrahmens 20 in einer oder in beiden Richtungen zu ermöglichen. Das heißt, die Längsachsen der Langlöcher 54 verlaufen in etwa parallel zur Längsachse des Werkzeugrahmens 20, wohingegen die langen Achsen der Langlöcher 56 parallel zur Längsachse des Rahmenteiles 16 verlaufen. Die Befestigungsmittel 48 sind in Form von Schrauben ausgebildet, die sich durch die Langlöcher 54 und 56 erstrecken, wobei jeweils ihr Schraubenkopf in einem Sicherungsstück 60 gehalten ist. Die Ausbildung des Sicherungsstückes geht am besten aus den Fig. 4 und 5 hervor und bei der Ausführung nach Fig. 5 ist zu erkennen, daß das Sicherungsstück 60 C-oder U-förmig ausgebildet ist, wobei der untere Schenkelteil 62 als Unterlegscheibe dienen kann und der andere Schenkelteil 64 als Drehsicherung für den Schraubenkopf. Aus Fig. 5 ist ferner ersichtlich, daß das aus Flachblech gebildete Sicherungsstück 60 mit seinem einen Schenkelteil 64 gegen den Halter 46 anliegt und in diesem Schenkelteil eine Ausnehmung aufweist, die dem Schraubenkopf 58 entspricht und diesen aufnimmt, so daß sich das Befestigungsmittel 48 nicht drehen kann, wenn die Bedienungsperson die zugehörigen Muttern 66 löst. Da auch der eine Schenkelteil 64 gegen den Halter 46 anliegt, kann sich das Sicherungsstück 60 während des Lösens und Anziehens der Muttern 66 auch nicht drehen.

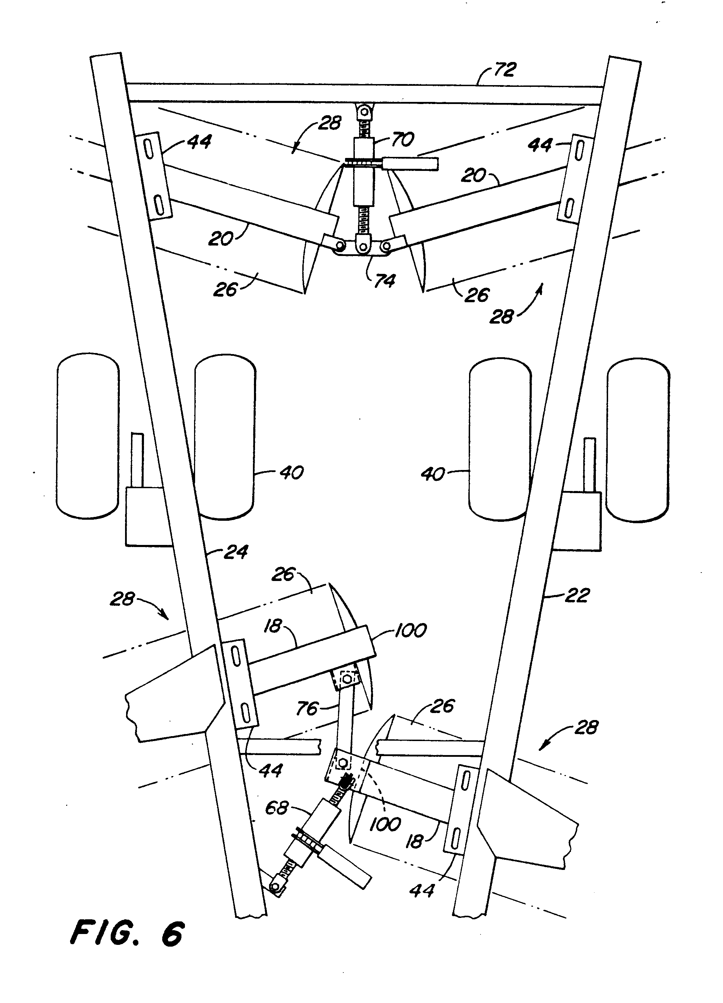

In Fig. 4 ist eine weitere Ausführungsform für das Sicherungsstück in Form eines Gußstückes 65 dargestellt, das anstelle des zweischenkligen und abgebogenen Sicherungsstückes nach Fig. 5 einstückig ausgebildet ist. Auch dieses Gußstück 65 ist mit einer Ausnehmung 65 versehen, die dem Schraubenkopf 58 entspricht, wodurch verhindert wird, daß sich das Befestigungsmittel 48 beim Anziehen oder Lösen der Schrauben 66 drehen kann. Auch hier ist ein vorstehender Schenkelteil 69 vorgesehen, der gegen eine Seite des Halters 46 anliegt, so daß auch bei dieser Ausführung ein Drehen des Gußstückes 65 beim Anziehen und Lösen der Schrauben 66 vermieden ist. Damit die Werkzeugrahmen 18 und 20 in ihrer Winkelstellung einfach verstellt werden können, nachdem die Schrauben 66 gelockert wurden, sind Stellvorrichtungen 68 und 70 in Form von Spannschlössern vorgesehen, die zwischen dem Zentralteil 10 und den inneren Werkzeugrahmenteilen 28 der Werkzeugrahmen 18 und 20 vorgesehen sind. Im einzelnen ist, wie aus den Fig. 1 und 6 hervorgeht, die rückwärtige Stellvorrichtung 70 an einem Rahmenstück 72 mit seinem einen Ende angeschlossen, wohingegen das andere Ende an einem Zwischenstück 74 angreift, das sich zwischen den inneren Enden der Werkzeugrahmenteile 28 erstreckt und mit diesen gelenkig verbunden ist. Hieraus folgt, daß bei Drehung des Spannschlosses 70 im Uhrzeigerdrehsinn, und zwar mit Blickrichtung von der Anhängevorrichtung 34 nach hinten, sich die inneren Enden der Werkzeugrahmenteile 28 nach rückwärts bewegen, um einen direkteren Angriffswinkel für die Werkzeuge 26 zu ergeben. Eine Bewegung entgegen dem Uhrzeigerdrehsinn der Stellvorrichtung 70 wird die Werkzeugrahmen 20 in die entgegengesetzte Richtung verstellen, wodurch der Angriffswinkel der Werkzeuge vergrößert wird. Da die Stellvorrichtung 70 an den inneren Werkzeugrahmen 28 der Werkzeugrahmen 20 an einem Punkt angreift, der im wesentlichen gleichen Abstand zu den entsprechenden Zapfen 50 und 52 aufweist, ist die Winkelverstellung im wesentlichen gleich, wenn die Stellvorrichtung betätigt wird.

Die vordere Stellvorrichtung 68 ist ebenfalls an dem Zentralteil 10 mit ihrem einen Ende angeschlossen, wohingegen das andere Ende an das innere Ende eines Werkzeugrahmenteiles 28 angreift. Die einander zugelegenen inneren Enden der inneren Werkzeugrahmenteile 28 sind im Bereich der Stellvorrichtung 68 noch über ein Zwischenstück 76 miteinander schwenkbar verbunden, so daß bei Betätigung der Stellvorrichtung 68 die Werkzeugrahmen 18 um gleiche Winkelmaße verstellt werden. Ähnlich wie bei der Verstellung der rückwärtigen Werkzeugrahmen 20 wird beim Drehen des Spannschlosses der vorderen Stellvorrichtung 68 der Winkel der vorderen Werkzeugrahmen 18 verstellt.

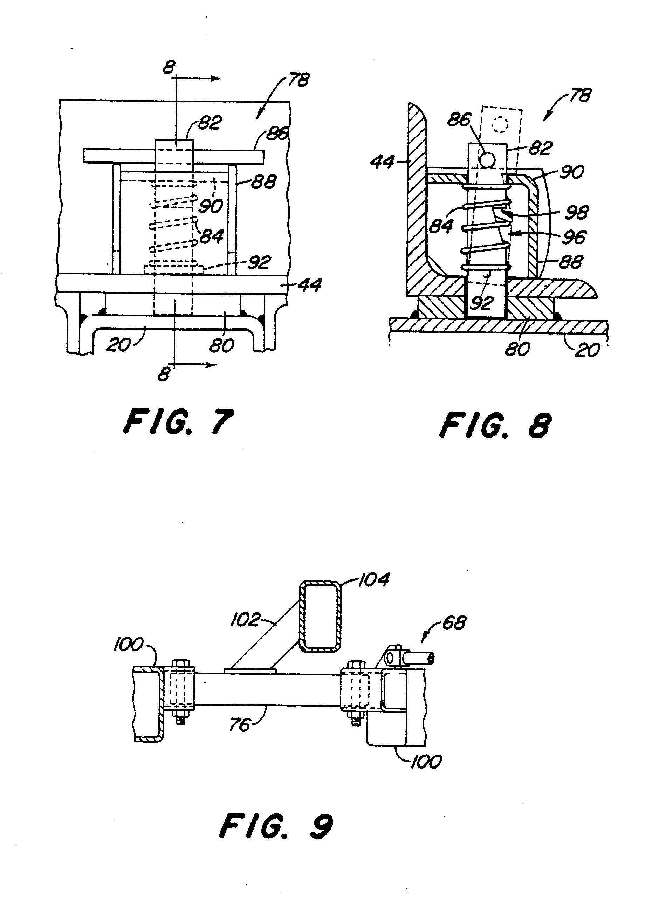

In den Fig. 1, 3, 7 und 8 ist ein Verriegelungsmechanismus 78 dargestellt, der dazu dient, die äußeren Enden der Werkzeugrahmen 18 und 20 in der Winkelstellung zu justieren, wodurch ein Wandern oder Rutschen der Befestigungsmittel 48 in den Langlöchern 54 und 56 ausgeschlossen wird. Der Verriegelungsmechanismus 78 weist unter anderem einen Aufnahmeteil 80, einen Verriegelungsteil 82, eine Feder 84 und einen Griff 86 sowie ein Gehäuse 88 auf. Der Aufnahmeteil 80 ist in Form einer Platte ausgebildet, die mit den Werkzeugrahmen 18, 20 verbunden ist und verschiedene Öffnungen aufweist, in die der Verriegelungsteil 82, der in Form eines Stiftes ausgebildet sein kann, einrastet. Diese Öffnungen sind in Fig. 2 mit 94 bezeichnet. Der Verriegelungsteil 82 ist in dem Gehäuse 88 sich im wesentlichen vertikal erstreckend angeordnet, wobei die Feder 84 den Verriegelungsteil 82 umgibt. Die Feder 84 befindet sich zwischen einem Oberteil 90 des Gehäuses 88 und einem Stift 82, derart, daß der Verriegelungsteil 82 nach unten in Richtung auf die Öffnungen 94 in den Aufnahmeteil 80 gedrückt wird. Der Griff 86 erlaubt der Bedienungsperson, daß der Verriegelungsteil 82 leicht aus einer der Öffnungen 94 in dem Aufnahmeteil herausgezogen werden kann, bevor die Werkzeugrahmen winkelig verstellt werden. Wie insbesondere aus der Fig. 8 hervorgeht, ist noch in die eine Seite des Verriegelungsteiles 82 eine Nut 96 eingearbeitet, die an ihrer Oberseite einen Horizontalanschlag 98 aufweist, der, wie as in gestrichelten Linien in Fig. 8 dargestellt ist, auf die Oberseite des Oberteils 90 aufliegen kann, wenn der Verriegelungsteil 90 angehoben wurde, um eine Verstellung der Werkzeugrahmen zu ermöglichen. Nachdem die Werkzeugrahmen ihre neue Winkelposition eingenommen haben, wird der Verriegelungsteil 82 einfach von der Oberseite zurückgedrückt, wodurch der Horizontalanschlag 98 den Oberteil 90 freigibt und die Feder 84 den Verriegelungsteil 82 schnell nach unten in eine der Öffnungen 94 in dem Aufnahmeteil 80 drückt. Dem Verriegelungsmechanismus 78 gegenüberliegend ist auf der anderen Seite des Rahmenteiles 16 noch ein Langloch 106 und ein Stift 108 vorgesehen, wobei der Stift 108 an dem Halter 44 angeordnet ist, während das Langloch 106 in eine Platte 107 eingearbeitet ist, die ihrerseits an dem Werkzeugrahmen 20 angreift. Der Zapfen 108 und das Langloch 106 dienen dazu, den Werkzeugrahmen 20 zu führen, wenn der Arbeitswinkel eingestellt wird, wodurch sichergestellt ist, daß der Verriegelungsteil 82 mit einer der Öffnungen 94 in dem Aufnahmeteil 80 zur Deckung kommt. Das in Deckung bringen des Verriegelungsteils 82 mit den Öffnungen 94 und das positive Verstellen der inneren Werkzeugrahmenteile 28 durch Betätigen der Stellvorrichtung ergibt eine positive Winkeleinstellung der Werkzeugrahmen.

Aus vorstehender Beschreibung, insbesondere aus Fig. 1 ergibt sich, daß, infolge der Gelenke 32, die Werkzeugrahmen 18 und 20 mit ihren äußeren Werkzeugrahmenteilen 30 in eine Transportposition nach oben geklappt werden können, wodurch die Gesamtbreite des landwirtschaftlichen Gerätes entsprechend verringert wird. Hierzu dienen die hydraulisch beaufschlagbaren Arbeitszylinder 36 und 38, die die äußeren Werkzeugrahmenteile 30 um die Gelenke 32 verschwenken können. Um eine nach oben gerichtete Bewegung der inneren Enden 100 der vorne gelegenen Werkzeugrahmen 18 verhindern zu können, wenn das Gewicht der äußeren Werkzeugrahmenteile 30 während des Einklappens über die Gelenke 32 gelangt, ist ein Zentralträger 102 vorgesehen. Dieser ist nicht erforderlich für die rückwärtig angeordneten Werkzeugrahmen 20, da diese an dem Zentralteil 10 in etwa ihren Mittelpunkten angeschlossen sind.

Wie im einzelnen aus Fig. 9 hervorgeht, ist der Zentralträger 102 fest mit einem Querteil 104 verbunden, erstreckt sich von diesem nach unten und steht in Gleitkontakt mit dem Zwischenstück 76, das die inneren Enden 100 der vorderen Werkzeugrahmen 18 verbindet. Die untere Oberfläche des Zentralträgers 110 ist hierzu flach ausgebildet und im wesentlichen horizontal, wodurch der Gleitkontakt mit dem Zwischenstück 76 ermöglicht wird, wenn die Stellvorrichtung 78 betätigt ist. Dieser Zentralträger 102 bewirkt durch seine flache Oberfläche, daß keine nach oben gerichtete Bewegung des Zwischenstückes 76 eintreten kann, wenn die äußeren Enden der außen liegenden Werkzeugrahmenteile 30 über die Arbeitszylinder 36 und 38 hochgeschwenkt werden.

Durch diese Verbesserung ist die Winkeleinstellung der Werkzeugrahmen mit Bezug auf den Zentralteil relativ schnell, einfach und leicht durchzuführen. Die Bedienungsperson braucht hierzu nur einen einzigen Schraubenschlüssel, um die Muttern die auf die Befestigungsmittel aufgeschraubt sind zu lösen. Ein zweiter Schraubenschlüssel ist nicht erforderlich, da die Sicherungsstücke verhindern, daß sich die Schraubenköpfe drehen, wenn die Muttern gelockert werden. Sobald die Muttern gelockert sind, braucht die Bedienungsperson lediglich noch den Verriegelungsteil 82 anzuheben und nachfolgend die Stellvorrichtungen entsprechend zu betätigen, wodurch die Werkzeugrahmen um gleiche Winkel im gewünschten Maße verstellt werden. Nach der Einstellung läßt die Bedienungsperson den Verriegelungsteil wieder in eine der Öffnungen in dem Aufnahmeteil einrasten, wonach dann nur noch die Muttern auf ihren entsprechenden Befestigungsmitteln angezogen werden müssen. Im ganzen gesehen ergibt sich eine besonders einfache und schnell durchzuführende Verstellung, die in der Regel mit einer einzigen Hand ausgeführt werden kann, um die Werkzeugrahmen an die verschiedenen Bedingungen anpassen zu können.

**Ansprüche**

1. Landwirtschaftliches Gerät mit einem Rahmenteil (16, 22, 24) und einem daran in horizontaler Richtung begrenzt verstellbar angeschlossenen, eine Gruppe von Werkzeugen (26) aufnehmenden Werkzeugrahmen (18, 20), wobei zu dessen Anschluß an dem Rahmenteil (16, 22, 24) über Befestigungsmittel (48) ein Halter (44) mit einem in Vertikalrichtung offenen Langloch (56) am Rahmenteil (16, 22, 24) angeordnet ist, dadurch gekennzeichnet, daß am Werkzeugrahmen (18, 20) ein Halter (46) mit mindestens einer Durchgangsöffnung (54) vorgesehen ist, die mit dem Langloch (56) zur Deckung bringbar ist, wobei durch Langloch (56) und Durchgangsöffnung (54) das Befestigungsmittel (48) undrehbar geführt ist.

2. Gerät nach Anspruch 1, dadurch gekennzeichnet, daß die Durchgangsöffnung (54) als Langloch, das Befestigungsmittel (48) als Schraube mit gegen Drehung gesichertem Schraubenkopf (58) ausgebildet ist und die Langlöcher (54, 56) mit ihrer langen Achse parallel oder etwa parallel zur Längsachse des zugehörigen Werkzeugrahmens - (18, 20) bzw. des Rahmenteils (16, 22, 24) angeordnet sind.

3. Gerät nach Anspruch 1 oder 2, dadurch gekennzeichnet, daß das Befestigungsmittel (48) in einem Sicherungsstück (60) geführt ist, das gegen Drehung gesichert ist.

4. Gerät nach Anspruch 3, dadurch gekennzeichnet, daß das Sicherungsstück (60) mit einem Schenkelteil (62 bzw. 64 bzw. 69) gegen den Rahmenteil (16, 22, 24) bzw. gegen den Werkzeugrahmen (18, 20) anliegt und das Befestigungsmittel - (48) gegen Drehung gesichert aufnimmt.

5. Gerät nach Anspruch 4, dadurch gekennzeichnet, daß bei als Schraube ausgebildetem Befestigungsmittel (48) das Sicherungsstück (60) eine dem Schraubenkopf (58) entsprechende Ausnehmung (67) und eine dem Schraubenschaft entsprechende Bohrung aufweist.

6. Gerät nach Anspruch 4 und 5, dadurch gekennzeichnet, daß das Sicherungsstück (60) U-förmig ausgebildet ist, wobei in einem Schenkelteil (62, 64) die Ausnehmung (67) und in dem anderen Schenkelteil (64, 62) die Bohrung für den Schraubenschaft vorgesehen ist.

7. Gerät nach Anspruch 1, dadurch gekennzeichnet, daß zwischen Rahmenteil (16, 22, 24) und Werkzeugrahmen (18, 20) ein Verriegelungsmechanismus (78) vorgesehen ist, der einen unter der Wirkung einer Feder (84) stehenden Verriegelungsteil (82) aufweist, der in einem Aufnahmeteil (80) in verschiedenen Positionen aufnehmbar ist.

8. Gerät nach Anspruch 7, dadurch gekennzeichnet, daß der als Stift ausgebildete Verriegelungsteil (82) eine Nut (96) mit einem Horizontalanschlag (98) aufweist, der gegen die Wirkung der Feder (84) in eine den Aufnahmeteil (80) freigebende und sich auf einem Gehäuse (88) abstützende Position verstellbar ist.

9. Gerät nach Anspruch 1, dadurch gekennzeichnet, daß zwischen Rahmenteil (16, 22, 24) und Werkzeugrahmen (18, 20) eine Stellvorrichtung (68, 70) vorgesehen ist.

10. Gerät nach Anspruch 1 mit zwei Werkzeugrahmen, dadurch gekennzeichnet, daß jeder Werkzeugrahmen (18, 20) einen durch ein Gelenk - (32) geteilten inneren und äußeren Werkzeugrahmenteil (28, 30) aufweist, wobei der äußere Werkzeugrahmenteil (30) vertikal veschwenkbar ist und die einander zugelegen Enden der inneren Werkzeugrahmenteile (28) über ein Zwischenstück (76) miteinander verbunden sind, das gegen Höhenverstellung durch einen gegen das Zwischenstück (76) anliegenden Zentralträger (102) gesichert ist.

FIG. 1

FIG. 2

**FIG. 3**

**FIG. 4**

**FIG. 5**

**FIG. 6**

**FIG. 7**

**FIG. 8**

**FIG. 9**